# EUROPÄISCHE PATENTSCHRIFT

(11) **EP 3 194 168 B1**
(45) Veröffentlichungstag und Bekanntmachung des Hinweises auf die Patenterteilung: **06.03.2019**
(21) Anmeldenummer: 15749833.8
(22) Anmeldetag: 14.08.2015
(51) Int. Cl.: B32B 38/00, B29C 65/00, H01M 10/04

(54) **VORRICHTUNG ZUR HERSTELLUNG EINER BATTERIEZELLE**
DEVICE FOR PRODUCING A BATTERY CELL
DISPOSITIF DE FABRICATION D'UN ÉLÉMENT DE BATTERIE

(30) Priorität: 19.09.2014 DE 102014113588
(43) Veröffentlichungstag der Anmeldung: 26.07.2017
(73) Patentinhaber: Manz AG, 72768 Reutlingen (DE)
(72) Erfinder: ENZ, Bernd, 73779 Deizisau (DE); LEGNER, Steffen, 73479 Ellwangen (DE); SCHMIEDER, Benjamin, 70174 Stuttgart (DE); SCHAUPP, Martin, 72800 Eningen (DE)
(74) Vertreter: Kohler Schmid Möbus Patentanwälte
(86) Internationale Anmeldenummer: PCT/EP2015/068738
(87) Internationale Veröffentlichungsnummer: WO 2016/041713

(56) Entgegenhaltungen:
- WO-A1-2012/072235
- WO-A1-2014/080544
- JP-A- 2007 242 507
- JP-B2- 5 561 191

## Beschreibung

Die Erfindung betrifft eine Vorrichtung zur Herstellung einer Batteriezelle, welche gestapelte Elektroden- und Separatorblätter aufweist, mit den Merkmalen des Oberbegriffs des Anspruchs 1.

Eine solche Vorrichtung ist aus der JP 2007 242507 A bekannt. Die Halbzellen wurden hier durch Zusammenschweißen der Separatorfolien gebildet und anschließend mit einem Schneidmesser ausgeschnitten.

Der vorliegenden Erfindung liegt daher die Aufgabe zugrunde, eine Vorrichtung zur Herstellung einer Batteriezelle aus mindestens einer Halbzelle vorzuschlagen, deren Einsatz zu keinen oder nur geringfügigen Veränderungen der physikalischen Eigenschaften der Separatoren führt.

Die Aufgabe wird gelöst durch eine Vorrichtung mit den Merkmalen des Anspruchs 1.

Die Vorrichtung umfasst einen Halter für eine Rolle einer ersten Separatorfolienbahn, ein Vakuumband, auf das die erste Separatorfolienbahn auflegbar ist, eine Handhabungseinrichtung zum Auflegen mindestens eines Elektrodenblatts auf die erste Separatorfolienbahn, einen Halter für eine Rolle einer zweiten Separatorfolienbahn, eine Einrichtung zum Verbinden der beiden Separatorfolien außerhalb des elektrochemisch aktiven Bereichs des Elektrodenblatts und eine Schneideinrichtung zum Ausschneiden von Halbzellen aus den verbundenen Separatorfolienbahnen.

Das Vakuumband hält und transportiert zunächst die erste Separatorfolienbahn. Die aufgelegten Elektrodenblätter werden anschließend ebenso wie die zweite Separatorfolienbahn ebenfalls von dem Vakuumband gehalten und mittransportiert, da das Vakuum durch die Poren der ersten Separatorfolienbahn hindurch auch die Elektrodenblätter und die zweite Separatorfolienbahn ansaugt. Die Saugkraft ist dabei ausreichend, die verschiedenen Lagen sicher für das Verbinden der beiden Separatorfolienbahnen und das anschließende Ausschneiden der Halbzellen zu positionieren.

Dabei ist die Schneideinrichtung eine Laserschneideinrichtung, die in der Lage ist, unterschiedlich geformte Halbzellen auszuschneiden.

Die Einrichtung zum Verbinden der Separatorfolien ist eine Laserschweißeinrichtung, die gleichzeitig die Laserschneideinrichtung ist. Die Taschen für die Elektrodenblätter werden bei dieser Ausgestaltung durch eine Schweißnaht erzeugt. Mit demselben Laser werden dabei sowohl die Taschen gebildet als auch die Halbzellen ausgeschnitten. Dazu werden die Laserleistung, die Fokussierung des Laserstrahls sowie die Bewegung des Lasers für die beiden unterschiedlichen Aufgaben entsprechend variiert.

Weitere Vorteile können dadurch erzielt werden, dass eine Einrichtung zur Konturerkennung des mindestens einen unter der zweiten Separatorfolie liegenden Elektrodenblatts vorgesehen ist, die mit der Steuerung der Einrichtung zum Verbinden der Separatorfolien und mit der Steuerung der Schneideinrichtung verbunden ist. Eine solche Einrichtung ermöglicht die Ermittlung der exakten Lage der Elektrodenblätter auf der ersten Separatorfolienbahn und damit ein präzises Bilden der Taschen für die Elektrodenblätter und Ausschneiden der Halbzellen. Die Einrichtung zur Konturerkennung kann dabei vorzugsweise eine Kamera mit Beleuchtungseinrichtung sein. Damit sind die Elektrodenblätter durch die poröse zweite Separatorfolienbahn hindurch gut zu erkennen.

Die Erfindung betrifft außerdem die Verwendung einer erfindungsgemäßen Vorrichtung zur Herstellung einer Batteriezelle, welche gestapelte Elektroden- und Separatorblätter aufweist, durch Herstellen mindestens einer Halbzelle bestehend aus zwei Separatorblättern und einem dazwischen angeordneten Elektrodenblatt, die gekennzeichnet ist durch die Schritte:
a. Zuführen einer ersten Separatorfolienbahn;
b. Ablegen mindestens eines Elektrodenblatts auf der ersten Separatorfolienbahn;
c. Auflegen einer zweiten Separatorfolienbahn auf das mindestens eine Elektrodenblatt;
d. Bildung einer Tasche für das mindestens eine Elektrodenblatt durch mindestens bereichsweises Verbinden der beiden Separatorfolien außerhalb des elektrochemisch aktiven Bereichs des Elektrodenblatts mittels einer Laserschweißeinrichtung und dadurch Bilden eines Taschenrandes;
e. Schneiden der beiden Separatorfolien entlang des oder der Taschenränder mit der Laserschweißeinrichtung und dadurch Herstellen einer oder mehrerer Halbzellen.

Bei dieser Verwendung der Vorrichtung müssen nicht vorgeschnittene Separatorblätter, sondern sehr viel einfacher zu handhabende Separatorfolienbahnen verarbeitet werden. Das Elektrodenblatt wird in einer Art Tasche zwischen den Separatorfolien aufgenommen. Die elektrochemisch aktive Fläche des Elektrodenblatts wird während des Herstellungsprozesses weder mechanisch noch mit Hitze beaufschlagt. Auch die Separatorfolien werden in diesem Bereich des Elektrodenblatts nicht verändert. Es können daher Batteriezellen mit reproduzierbaren elektrochemischen Eigenschaften hergestellt werden. Ein weiterer Vorteil der erfindungsgemäßen Verwendung liegt darin, dass Elektrodenblätter mit unterschiedlichsten Formen eingesetzt werden können. Wenn dabei der Taschenrand dem äußeren Rand des Elektrodenblatts folgend und außerhalb des Elektrodenblatts gebildet wird, können passgenaue Taschen für die Elektrodenblätter hergestellt werden. Vorzugsweise können hierzu der oder die Taschenränder jeweils in einem konstanten Abstand zum Elektrodenblattrand verlaufend gebildet werden.

Das Ausschneiden der Halbzellen kann dicht am Taschenrand für das Elektrodenblatt erfolgen, sodass Halbzellen mit nur einem geringen Folienüberstand erzeugt werden können. Bei einer gegebenen Umverpackung lässt sich daher fast der gesamte Querschnitt durch die Elektrodenblätter ausfüllen und dadurch eine sehr leistungsfähige Batterie herstellen.

Das Verbinden der beiden Separatorfolien in Schritt d. wird mittels Laserschweißen durchgeführt. Diese Ausgestaltung lässt beliebige Formen für das Elektrodenblatt zu, da mit dem Laserkopf der Kontur des Blattes gefolgt werden kann.

Nachfolgend werden zwei Ausführungsbeispiele von Vorrichtungen zur Herstellung von Halbzellen für die Produktion von Batteriezellen mit Bezug auf die Zeichnung näher beschrieben.

Im Einzelnen zeigen:
- Fig. 1: eine schematische Draufsicht auf eine erste Vorrichtung zur Herstellung von Halbzellen;
- Fig. 2: eine Seitenansicht der Vorrichtung aus Fig. 1;
- Fig. 3: eine Detailansicht einer Tasche mit einem Elektrodenblatt nach dem Verbinden der beiden Separatorfolien mit der Vorrichtung aus Fig. 2;
- Fig. 4: eine Detailansicht des Ausschneidens einer Halbzelle mit der Vorrichtung aus Fig. 2;
- Fig. 5: eine Draufsicht auf eine Separatorfolienbahn und ein Elektrodenblatt bei der Herstellung mit einer zweiten, nicht erfindungsgemäßen Vorrichtung;
- Fig. 6: eine Draufsicht auf eine mit der zweiten Vorrichtung hergestellte Halbzelle;
- Fig. 7: einen vergrößerten Teilschnitt durch die Halbzelle aus Fig. 6.

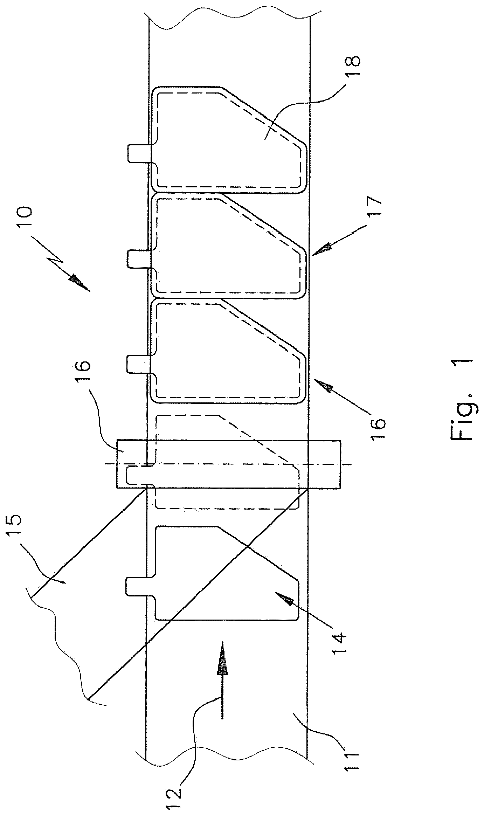

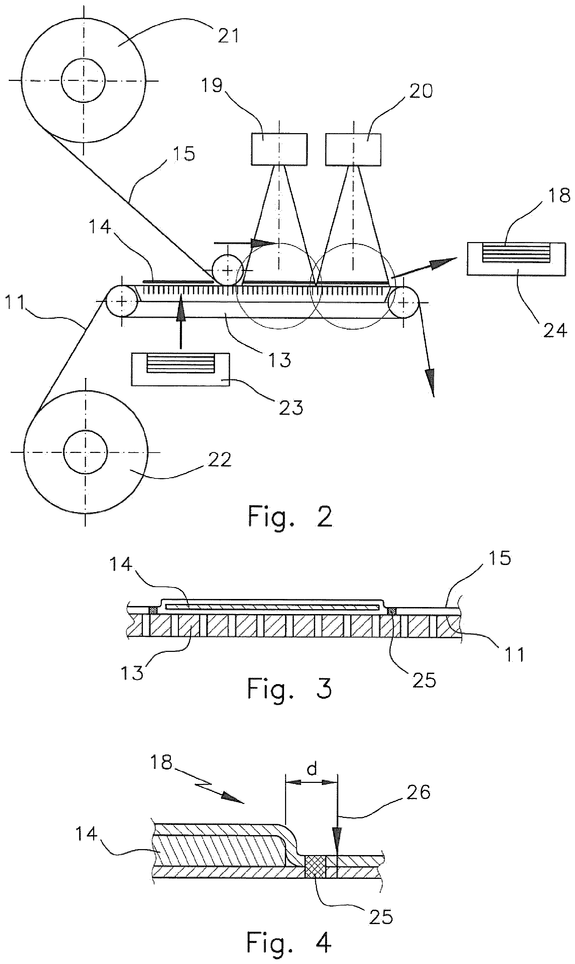

Die Vorrichtung 10 aus den Fig. 1 und 2 ermöglicht die Herstellung von Halbzellen nach einem ersten Verfahren. Es wird zunächst eine erste Separatorfolienbahn 11 in Pfeilrichtung 12 einem aus Fig. 2 ersichtlichen Vakuumband 13 zugeführt. Anschließend wird ein Elektrodenblatt 14 auf die erste Separatorfolienbahn 11 aufgelegt und ebenfalls durch das Vakuumband 13 durch die erste Separatorfolienbahn hindurch mit angesaugt. Dann wird eine zweite Separatorfolienbahn 15 über eine Umlenkrolle 16 zugeführt. Auch die Separatorfolienbahn 15 wird durch das Vakuumband 13 fixiert. Anschließend erfolgt in einem Schritt 16 das Verbinden der beiden Separatorfolienbahnen 11, 15 und in einem Schritt 17 das Ausschneiden der fertigen Halbzelle 18.

Wie Fig. 2 verdeutlicht, ist zum Verbinden der beiden Separatorfolienbahnen 11, 15 eine Einrichtung 19 vorgesehen, die bei dieser Vorrichtung eine Lasereinrichtung ist. Das Ausschneiden der Halbzellen 18 erfolgt mit einer Laserschneideinrichtung 20, die erfindungsgemäß identisch zur Lasereinrichtung 19 ist. Weiter sind in Fig. 2 Vorratsrollen 21, 22 für die Separatorfolienbahnen 11, 15, ein Entnahmemagazin 23 für die Elektrodenblätter 14 sowie ein Magazin 24 für die fertigen Halbzellen gezeigt.

Fig. 3 zeigt einen Schnitt durch die Separatorfolien 11, 15 und das Elektrodenblatt 14 nach dem Verbindungsvorgang in Schritt 16. Die Schweißnaht 25 liegt unmittelbar neben der Kante des Elektrodenblatts 14, was auch aus Fig. 4 zu erkennen ist, die eine Kante der fertigen Halbzelle 18 nach dem Schneidvorgang zeigt. Die Schneidkante 26 liegt in einem konstanten Abstand d von der äußeren Kante des Elektrodenblatts 14 entfernt. Dadurch entsteht eine Halbzelle 18, deren Abmessungen nur unwesentlich größer sind als diejenigen des Elektrodenblatts 14.

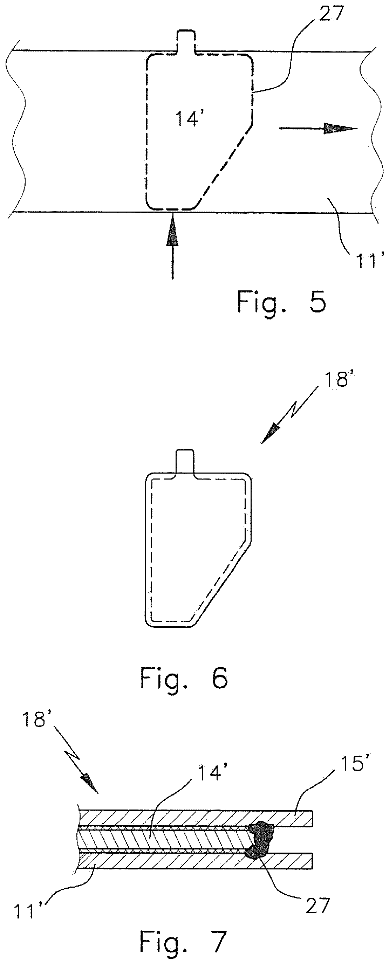

Fig. 5 illustriert ein alternatives Herstellungsverfahren für eine Halbzelle 18' (Fig. 6) mittels einer zweiten, nicht erfindungsgemäßen Vorrichtung. Bei diesem Verfahren werden wieder Elektrodenblätter 14' auf eine erste Separatorfolienbahn 11' aufgelegt. Anschließend wird jedoch entlang der Umfangslinie der Elektrodenblätter 14' Klebstoff 27 zumindest punktuell aufgetragen, bevor die zweite Separatorfolienbahn aufgelegt wird (nicht gezeigt). Auch bei diesem Verfahren kann ein Vakuumband zum Fixieren und Transportieren der Separatorfolienbahnen sowie der Elektrodenblätter 14' eingesetzt werden. Die Saugkraft des Vakuumbandes ist stark genug, die nötige Anpresskraft zur Herstellung der Klebeverbindung zwischen der zweiten Separatorfolienbahn und der ersten Separatorfolienbahn 11' zu erzeugen. Anschließend können die dadurch gebildeten Taschen mit den Elektrodenblättern 14' beispielsweise durch Laserschneiden ausgeschnitten werden, sodass einzelne, in Fig. 6 gezeigte Halbzellen 18' entstehen.

Fig. 7 zeigt einen vergrößerten Schnitt durch einen Randbereich der Halbzelle 18' aus Fig. 6. Es sind die beiden Separatorfolien 11', 15' mit dem eingeschlossenen Elektrodenblatt 14' und der Klebstoff 27 zu erkennen. Dieser umschließt die äußere Kante des Elektrodenblatts 14', sodass dieses mit den Separatorfolien 11', 15' verklebt ist. Gleichzeitig verbindet der Klebstoff 27 die beiden Separatorfolien 11', 15'.

## Patentansprüche

1. Vorrichtung zur Herstellung einer Batteriezelle mit einem Elektrodenstapel, der aus mindestens einer Halbzelle (18, 18') hergestellt ist, wobei die Halbzelle (18, 18') aus zwei Separatorfolien (11, 15; 11', 15') und einem in einer Tasche zwischen den Separatorfolien (11, 15; 11', 15') angeordneten Elektrodenblatt (14, 14') gebildet ist, mit einem Halter für eine Rolle (22) einer ersten Separatorfolienbahn (11), einem Vakuumband (13), auf das die erste Separatorfolienbahn (11) auflegbar ist, einer Handhabungseinrichtung zum Auflegen mindestens eines Elektrodenblatts (14) auf die erste Separatorfolienbahn (11), einem Halter für eine Rolle (21) einer zweiten Separatorfolienbahn (15), einer Einrichtung (19) zum Verbinden der beiden Separatorfolien (11, 15) außerhalb des elektrochemisch aktiven Bereichs des Elektrodenblatts (14) und einer Schneideinrichtung (20) zum Ausschneiden von Halbzellen (18) aus den verbundenen Separatorfolienbahnen (11, 15), **dadurch gekennzeichnet, dass** die Schneideinrichtung (20) eine Laserschneideinrichtung ist und die Einrichtung (19) zum Verbinden der Separatorfolien (11, 15) eine Laserschweißeinrichtung ist, die gleichzeitig die Laserschneideinrichtung (20) ist.

2. Vorrichtung nach Anspruch 1, **dadurch gekennzeichnet, dass** eine Einrichtung zur Konturerkennung des mindestens einen unter der zweiten Separatorfolie (15, 15') liegenden Elektrodenblatts (14, 14') vorgesehen ist, die mit der Steuerung der Einrichtung (19) zum Verbinden der Separatorfolien (11, 15; 11', 15') und mit der Steuerung der Schneideinrichtung (20) verbunden ist.

3. Vorrichtung nach Anspruch 2, **dadurch gekennzeichnet, dass** die Einrichtung zur Konturerkennung eine Kamera mit Beleuchtungseinrichtung ist.

4. Verwendung einer Vorrichtung nach einem der Ansprüche 1 bis 3 zur Herstellung einer Batteriezelle, welche gestapelte Elektroden- und Separatorblätter (11, 14, 15; 11', 14', 15') aufweist, zum Herstellen mindestens einer Halbzelle (18, 18') bestehend aus zwei Separatorblättern (11,15; 11', 15') und einem dazwischen angeordneten Elektrodenblatt (14, 14'), **gekennzeichnet durch** die Schritte:
a. Zuführen einer ersten Separatorfolienbahn (11, 11');
b. Ablegen mindestens eines Elektrodenblatts (14, 14') auf der ersten Separatorfolienbahn (11, 11');
c. Auflegen einer zweiten Separatorfolienbahn (15, 15') auf das mindestens eine Elektrodenblatt (14, 14');
d. Bildung einer Tasche für das mindestens eine Elektrodenblatt (14, 14') durch mindestens bereichsweises Verbinden der beiden Separatorfolien (11, 15; 11', 15') außerhalb des elektrochemisch aktiven Bereichs des Elektrodenblatts (14, 14') mittels einer Laserschweißeinrichtung und dadurch Bilden eines Taschenrandes;
e. Schneiden der beiden Separatorfolien (11, 15, 11', 15') entlang des oder der Taschenränder mit der Laserschweißeinrichtung und dadurch Herstellen einer oder mehrerer Halbzellen (18, 18').

5. Verwendung nach Anspruch 4, **dadurch gekennzeichnet, dass** der Taschenrand dem äußeren Rand des Elektrodenblatts (14, 14') folgend und außerhalb des Elektrodenblatts gebildet wird.

6. Verwendung nach Anspruch 5, **dadurch gekennzeichnet, dass** der oder die Taschenränder jeweils in einem konstanten Abstand zum Elektrodenblattrand verlaufend gebildet werden.

## Claims

1. Device for producing a battery cell with an electrode stack, which is produced from at least one half cell (18, 18'), in which the half cell (18, 18') is formed from two separator films (11, 15; 11', 15') and an electrode sheet (14, 14') arranged in a pocket between the separator films (11, 15; 11', 15'), with a holder for a roll (22) of a first separator film web (11), a vacuum belt (13), onto which the first separator film web (11) may be laid, a handling device for laying at least one electrode sheet (14) onto the first separator film web (11), a holder for a roll (21) of a second separator film web (15), a device (19) for connecting both separator films (11, 15) outside the electrochemically active area of the electrode sheet (14) and a cutting device (20) for cutting out half cells (18) from the connected separator film webs (11, 15), **characterised in that** the cutting device (20) is a laser cutting device and the device (19) for connecting the separator films (11, 15) is a laser welding device, which is the laser cutting device (20) at the same time.

2. Device according to claim 1, **characterised in that** a device for contour detection of the at least one electrode sheet (14, 14') lying under the second separator film (15, 15') is provided, which is connected to the control of the device (19) for connecting the separator films (11, 15; 11', 15') and to the control of the cutting device (20).

3. Device according to claim 2, **characterised in that** the device for contour detection is a camera with illuminating device.

4. Use of a device according to one of claims 1 to 3 for producing a battery cell, which has stacked electrode and separator sheets (11, 14, 15; 11', 14', 15'), for producing at least one half cell (18, 18') consisting of two separator sheets (11, 15; 11', 15') and an electrode sheet (14, 14') arranged between them, **characterised by** the steps:
a. Supplying a first separator film web (11, 11');
b. Applying at least one electrode sheet (14, 14') to the first separator film web (11, 11');
c. Laying a second separator film web (15, 15') onto the at least one electrode sheet (14, 14');
d. Forming a pocket for the at least one electrode sheet (14, 14') through connecting both separator films (11, 15; 11', 15') outside the electrochemically active area of the electrode sheet (14, 14') at least in areas by means of a laser welding device and forming a pocket edge through this;
e. Cutting both separator films (11, 15, 11', 15') along the pocket edge or edges with the laser welding device and producing one or several half cells (18, 18') through this.

5. Use according to claim 4, **characterised in that** the pocket edge is formed following the outer edge of the electrode sheet (14, 14") and outside the electrode sheet.

6. Use according to claim 5, **characterised in that** the pocket edge or edges are formed running at a constant distance from the electrode sheet edge.

## Revendications

1. Dispositif de fabrication d'un élément de batterie avec un empilement d'électrodes, qui est fabriqué à partir d'au moins un demi-élément (18, 18'), dans lequel le demi-élément (18, 18') est formé de deux films séparateurs (11, 15; 11', 15') et d'une lame d'électrode (14, 14') agencée dans une poche entre les films séparateurs (11, 15 ; 11', 15'), avec un support pour un rouleau (22) d'une première bande de film séparateur (11), une bande transporteuse sous vide (13), sur laquelle la première bande séparatrice (11) peut être appliquée, un dispositif de manipulation pour appliquer au moins une lame d'électrode (14) sur la première bande de film séparateur (11), un support pour un rouleau (21) d'une seconde bande de film séparateur (15), un dispositif (19) pour relier les deux films séparateurs en dehors de la zone électrochimiquement active de la lame d'électrode (14) et un dispositif de coupe (20) pour couper des demi-éléments (18) à partir des bandes de film séparateur reliées (11, 15), **caractérisé en ce que** le dispositif de coupe (20) est un dispositif de coupe à laser et le dispositif (19) pour relier les films séparateurs (11, 15) est un dispositif de soudage à laser qui est simultanément le dispositif de coupe à laser (20).

2. Dispositif selon la revendication 1, **caractérisé en ce qu'**un dispositif est prévu pour identifier le contour de l'au moins une lame d'électrode (14, 14') qui se trouve en dessous du second film séparateur (15, 15'), lequel dispositif est lié à la commande du dispositif (19) pour relier les films séparateurs (11, 15 ; 11', 15') et à la commande du dispositif de coupe (20).

3. Dispositif selon la revendication 2, **caractérisé en ce que** le dispositif d'identification du contour est une caméra avec un dispositif d'éclairage.

4. Utilisation d'un dispositif selon l'une quelconque des revendications 1 à 3 pour la fabrication d'un élément de batterie, qui présente des lames d'électrodes et des lames séparatrices empilées (11, 14, 15 ; 11', 14', 15'), pour la fabrication au moins d'un demi-élément (18, 18') constitué de deux lames séparatrices (11, 15; 11', 15') et d'une lame d'électrode (14, 14') agencée entre elles, **caractérisée par** les étapes consistant à :
a. acheminer une première bande de film séparateur (11, 11') ;
b. déposer au moins une lame d'électrode (14, 14') sur la première bande de film séparateur (11, 11') ;
c. appliquer une seconde bande de film séparateur (15, 15') sur l'au moins une lame d'électrode (14, 14') ;
d. former une poche pour la au moins une lame d'électrode (14, 14') par liaison au moins par sections des deux films séparateurs (11, 15 ; 11', 15') en dehors de la zone électrochimiquement active de la lame d'électrode (14, 14') au moyen d'un dispositif de soudage à laser et en formant de la sorte un bord de poche ;
e. couper les deux films séparateurs (11, 15, 11', 15') le long du ou des bords de la poche avec le dispositif de soudage à laser et élaborer de la sorte un ou plusieurs demi-éléments (18, 18').

5. Utilisation selon la revendication 4, **caractérisée en ce que** le bord de la poche est formé en suivant le bord externe de la lame d'électrode (14, 14') et à l'extérieur de la lame d'électrode.

6. Utilisation selon la revendication 5, **caractérisée en ce que** le ou les bords de la poche est ou sont formés en s'étendant à une distance constante du bord de la lame d'électrode.
